# EUROPÄISCHE PATENTSCHRIFT

(11) **EP 2 607 112 B1**
(45) Veröffentlichungstag und Bekanntmachung des Hinweises auf die Patenterteilung: **20.07.2016**
(21) Anmeldenummer: 12008520.4
(22) Anmeldetag: 21.12.2012
(51) Int. Cl.: B60D 1/48

(54) **Anhängevorrichtung für ein Fahrzeug**
Coupling device for a vehicle
Dispositif de remorque pour un véhicule

(30) Priorität: 24.12.2011 DE 102011122471
(43) Veröffentlichungstag der Anmeldung: 26.06.2013
(73) Patentinhaber: WESTFALIA - Automotive GmbH, 33378 Rheda-Wiedenbrück (DE)
(72) Erfinder: Burdick, Sascha, 34414 Warburg (DE); Waldemar, Dinius, 33098 Paderborn (DE); Weltz, Jörn-René, 33758 Schloss Holte-Stukenbrock (DE); Nowosselzew, Eugen, 33098 Paderborn (DE)
(74) Vertreter: Patentanwälte Bregenzer und Reule Partnerschaftsgesellschaft mbB

(56) Entgegenhaltungen:
- CA-A1- 2 494 032
- DE-U1-202010 008 777
- US-A1- 2011 109 063

## Beschreibung

Die Erfindung betrifft eine Anhängevorrichtung für ein Fahrzeug, insbesondere einen Personenkraftwagen, die am Heck des Personenkraftwagens angeordnet oder anordenbar ist gemäß dem Oberbegriff des Anspruchs 1.

Eine derartige Anhängevorrichtung ist in US 2011/0109063 A1 oder DE 20 2010 008 777 U1 beschrieben.

Es ist eine Anhängekupplung für ein Kraftfahrzeug bekannt, US 5,489,111, die ein Tragsystem aufweist, das einen seitliche Längsträger verbindenden Querträger umfasst. Der Querträger besitzt einen viereckigen Rohrquerschnitt, wobei auf dem Querträger horizontale Befestigungskonsolen der Längsträger aufliegen. Die Längsträger sind dazu noch mit aufrechten Befestigungskonsolen versehen. Die horizontalen und aufrechten Befestigungskonsolen sind unter Vermittlung von Schrauben an U-förmigen Rahmenabschnitten des Kraftfahrzeugs befestigt. In einer in Fahrzuglängsrichtung verlaufenden Mittellängsebene trägt der Querträger einen vierkantrohrförmigen Aufnahmeabschnitt für einen Kugelhals.

Die DE 10 2007 032 932 A1 gibt eine Befestigungsvorrichtung für eine Anhängekupplung mit einem Kugelhals wieder, der an einem ersten Ende eine Kupplungskugel trägt und an einem zweite Ende mit einer Halteinrichtung verbunden ist. Die Halteeinrichtung umfasst einen oberen Profilkörper und einen unteren Profilkörper, die im Querschnitt U-förmig ausgeführt sind und in der Weise zusammengesetzt sind, dass sie einen Hohlraum bilden, der einen aufrechten Trägerabschnitt umgibt. Der aufrechte Trägerabschnitt ist mit horizontalen Längsstreben vereinigt, an denen sich freie Enden von Schenkeln der U-förmigen Profilkörper abstützen. Die Profilkörper werden unter Vermittlung von aufrechten Schrauben zusammengehalten, die sich im Bereich der Schenkel erstrecken.

Aufgabe der Erfindung ist es, eine Anhängevorrichtung für ein Fahrzeug zu konzipieren, die sich durch eine einfache Konstruktion und einen vertretbaren Bauraumanspruch auszeichnet. Dabei sollten Bauteile der Anhängekupplung so ausgelegt sein, dass sie Leichtbau Bestrebungen Rechnung tragen.

Zur Lösung der Aufgabe ist eine Anhängevorrichtung gemäß der technischen Lehre des Anspruchs 1 vorgesehen.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Konzept der Anhängevorrichtung mit fertigungstechnisch günstigen Elementen als Querträger und Längsträger nicht nur relativ wenig Platz bspw. an der Heckunterseite des Personenkraftwagens beansprucht, sondern auch Möglichkeiten eröffnet, die Anhängevorrichtung leichtgewichtig zu gestalten. Für die Festigkeitsauslegung der Anhängevorrichtung eigenen sich rechnerische und/oder iterative Maßnahmen. In den Querträger, der als Rohrabschnitt mit viereckigem bzw. rechteckigem Querschnitt ausgeführt ist, lässt sich die Aufnahme für das Zugsystem oder das Verbindungssystem zum Anhängen des Anhängers auf vorbildliche Weise integrieren.

Die eine Vorrichtung oder Anhängekupplung gemäß der Erfindung weist beispielsweise ein Verbindungssystem oder Zugsystem mit einem steckbaren oder in sonstiger Weise lösbaren Kupplungsarm zum Ankuppeln eines Anhängers auf. Das Verbindungssystem kann aber auch beispielsweise einen beweglich am Querträger mittels einer Lagereinrichtung gelagerten Kupplungsarm umfassen. Beispielsweise ist der Kupplungsarm mittels eines Schwenklagers und/oder eines Schiebelagers beweglich an dem Querträger gelagert, so dass er zwischen einer Arbeitsstellung, bei der ein Kuppelelement zum Ankuppeln eines Anhängers nach hinten vor das Heck des Fahrzeugs vorsteht, und einer Ruhestellung beweglich ist, bei der der Kupplungsarm und/oder das Kuppelelement näher am Heck des Fahrzeugs angeordnet sind, beispielsweise unter oder hinter einen Stoßfänger des Fahrzeugs bewegt sind. Die Aufnahme für das Verbindungssysteme oder Zugsystem umfasst dann beispielsweise eine Aufnahme für die Lagereinrichtung.

Hervorzuheben ist aber auch die musterhafte Verbindung der Längsträger mit den im Querschnitt rechteckigen Endbereichen des Querträgers. Dazu sind von den aus hochfestem Werkstoff -Metall; Verbundwerkstoff- bestehenden Längsträgern weggeführte Befestigungskonsolen vorgesehen, die z.B. aus einem Stück mit den Längsträgern hergestellt sein können und die obere Seite und die untere Seite bzw. hintere Seite des rechteckigen Querschnitts des Querträgers funktionsgerecht z.B. mit Berührungskontakt umgreifen. Eine wirksame und sichere Verbindung der Befestigungskonsolen mit den Seiten des Querträgers wird durch Schrauben, Kleben dgl. erreicht. Schließlich tragen die montierbaren Glieder in Gestalt von Schrauben dazu bei, dass die Aufnahme für das Zugsystem, umfassend den Kugelhals, eine Beispiel gebende, den auftretenden Belastungen standhaltende Verbindung mit dem Querträger eingeht.

Die rechteckigen Querschnitte sind beispielsweise quadratisch. Vorzugsweise sind etwa horizontal verlaufende Wandabschnitte des Querträgers breiter als etwa vertikal verlaufende Wandabschnitte. Der Querträger ist also relativ flach, weist jedoch in Fahrzeuglängsrichtung eine demgegenüber größere Tiefe auf.

Die Befestigungskonsolen umfassen beispielsweise in der Art von Flanschen abstehende Wände.

Die Befestigungskonsolen können beispielsweise auch Stützen oder Stützwände umfassen, die sich zwischen einerseits einer den Querträger tragenden Wand und andererseits dem Grundkörper des Längsträger erstrecken.

Mindestens eine Wand oder mehrere Wände der Befestigungskonsolen können einstückig mit dem Grundmaterial oder Grundkörper des Längsträgers sein, beispielsweise durch eine Abkantung gebildet sein. Der Grundkörper des Längsträger hat beispielsweise eine Flachgestalt.

Es ist aber auch möglich, dass eine oder mehrere Wände der Befestigungskonsolen an das Grundmaterial oder dem Grundkörper des Längsträger angesetzt sind, beispielsweise mittels einer Schweißverbindung, einer Klebeverbindung, einer Schraubverbindung oder dergleichen.

Die Befestigungskonsolen können eine Art Steckaufnahme oder Aufnahmemaul für das jeweilige Längsende des Querträgers definieren.

Die Befestigungskonsolen begrenzen beispielsweise U-förmige Aufnahmen für die Längsenden des Querträgers.

In der Zeichnung ist ein Ausführungsbeispiel der Erfindung dargestellt, das nachstehend näher erläutert wird. Es zeigen:
- Figur 1: eine Rückansicht eines Personenkraftwagens mit einer Anhängekupplung,

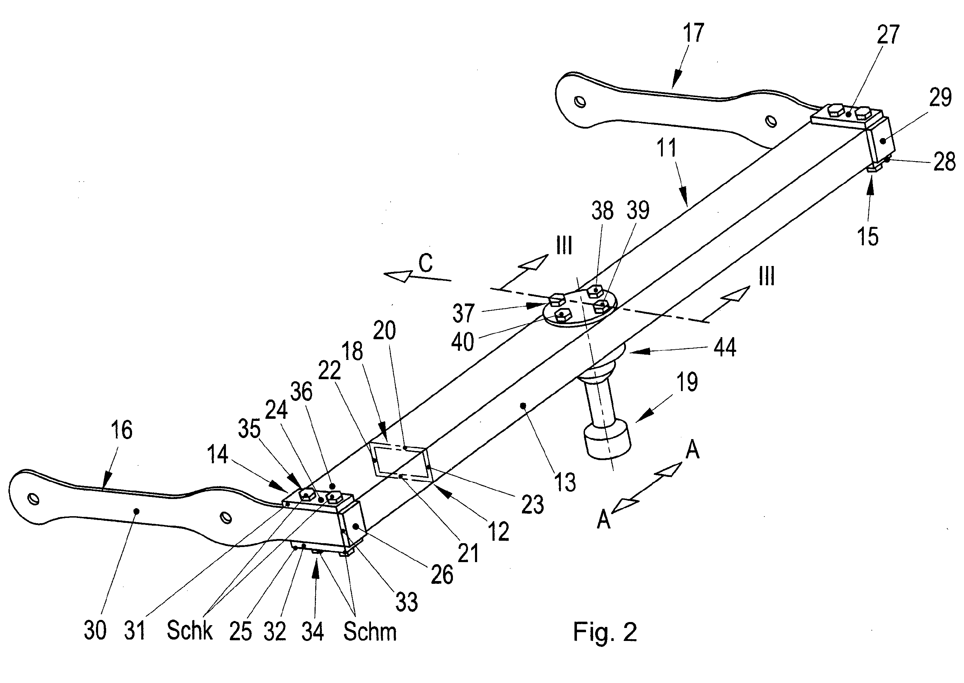

- Figur 2: eine Schrägansicht der Anhängekupplung gemäß Fig. 1 in größerem Maßstab,

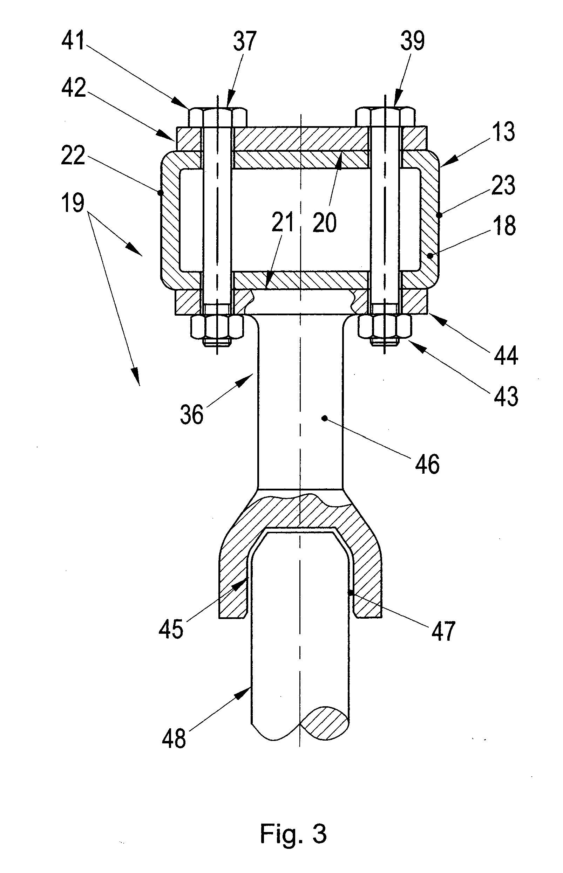

- Figur 3: einen Querschnitt eines Querträgers der Anhängekupplung mit einer Aufnahme für ein Zugsystem oder Verbindungssystem der besagten Anhängekupplung.

Von einem Personenkraftwagen 1 dargestellt ist ein von Rädern 2 und 3 getragener Aufbau 4, der in einem Heck 5 eine mit einer unteren in Fahrzeugquerrichtung A-A verlaufenden Begrenzungskante 6 nahe an einen Stoßfänger 7 herangeführte Glasscheibe 8 umfasst. Die Glasscheibe 8 erstreckt sich über eine wesentliche Breite des Personenkraftwagens 1 und ist mit einem Scheibenwischerarm 9 versehen, dessen Schwenkachse 10 auf einer Mittellängsebene B-B des besagten Personenwagens liegt.

Benachbart der Unterkante des Stoßfängers 7 verläuft in Fahrzeugquerrichtung A-A eine Anhängevorrichtung 11, die einen als Rohrabschnitt 12 ausgebildeten Querträger 13 aufweist, der an Endbereichen 14 und 15 mit Längsträgern 16 und 17 versehen ist. Der aus Metall- Leichtmetall-, Stahl- Verbundwerkstoff oder dgl. bestehende Rohrabschnitt 12 weist einen viereckigen Querschnitt auf, der im Ausführungsbeispiel als rechteckiger Querschnitt 18 ausgeführt ist. In der Mittelängsebene B-B ist am Querträger 13 ein Verbindungssystem 19 oder Zugsystem 19 angebracht, das mit einer Tragvorrichtung z.B. für Fahrräder oder einem Anhänger -letztere sind nicht abgebildet- koppelbar ist.

Der Querschnitt 18 besitzt längere, obere und untere horizontale Seiten 20 bzw. 21 sowie in Fahrtrichtung C betrachtet kürzere, vordere und hintere senkrechte Seiten 22 bzw. 23. Die oberen und unteren Seiten 20 und 21 sowie die hintere entgegen der Fahrtrichtung C gerichtete Seite 23 des Querschnitts 18 werden an den Endbereichen 14 und 15 von Befestigungskonsolen 24, 25 und 26 bzw. 27, 28 und 29 der Längsträger 16 und 17 bspw. mit Berührungskontakt umgriffen. Jeder Längsträger. z.B. der Längsträger 16, ist aus hochfestem Flachmaterial wie Metall, Kunststoff, Verbundwerkstoff oder dgl. gefertigt und an nicht gezeigten Rahmenabschnitten des Aufbaus 4 befestigt. Dabei steht eine längere Querschnittseite 30 des schwertartigen Längsträgers 16 im Wesentlichen senkrecht und die Befestigungskonsolen 24, 25 und 26 werden durch Abwinkelungen 31, 32 und 33 des Längsträgers 16 gebildet, wobei besagte Befestigungskonsolen 24, 25 und 26 aus einem Stück mit dem Längsträger 16 hergestellt sind. Denkbar ist aber auch, den Längsträger 16 und die Befestigungskonsolen 24, 25 und 26 getrennt voneinander herzustellen und anschließend zusammenzubauen.

Die Befestigungskonsolen 24, 25 und 26 sind durch Schrauben 34 und 35 oder Kleben mit dem Querträger 13, und zwar den Seiten 20, 21 und 23, verbunden. Dabei besteht die Möglichkeit die Befestigungskonsolen 24 und 25 sowohl mit den Schrauben 34 und 35 als auch durch Kleben bzw. die Befestigungskonsole 26 lediglich durch Kleben in Lage zu halten. Die Schrauben 34 und 35 können Durchgangsschrauben sein, deren Schraubenköpfe SchK und Schraubenmuttern Schm sich an den Befestigungskonsolen 24 bzw. 25 abstützen.

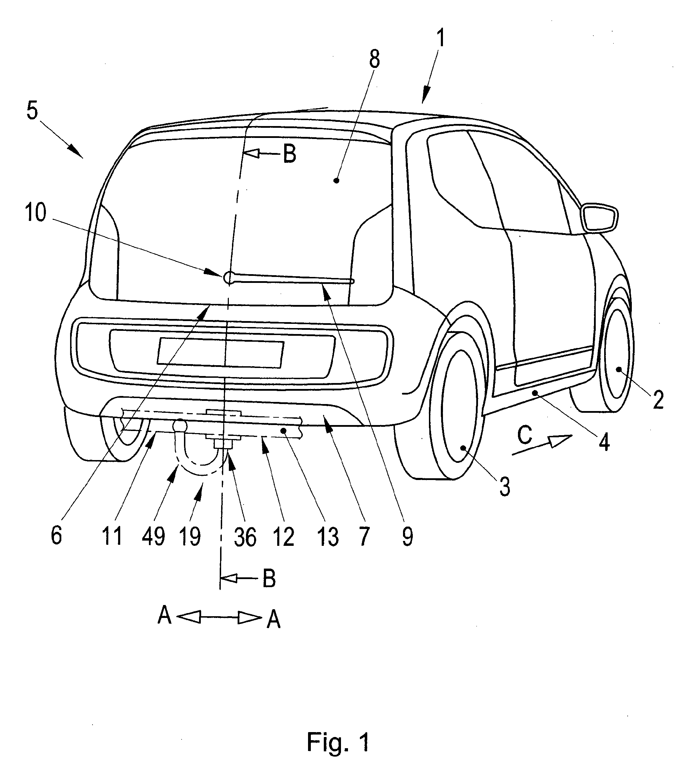

Das Zugsystem 19 ist an einer an Aufnahme 36 gehalten, die in der Mittellängsebene B-B mit dem Querträger 13 verbunden ist. Hierzu dienen montierbare Glieder, die die obere Seite 20 und die untere Seite 21 des Querträgers 13 durchdringen. Diese Glieder werden durch Schrauben 37, 38, 39 und 40 gebildet, wovon jede Schraube, z.B. die Schraube 37, mit einem Schraubenkopf 41 mit einer kreisförmigen Stützplatte 42 zusammenwirkt, die an der oberen Seite 20 des Querträgers 13 anliegt. Dagegen spannen Schraubenmuttern 43 der Schrauben 37 eine z.B. kreisförmige Tragplatte 44 gegen die untere Seite 21 des Querträgers 13. Die Tragplatte 44 ist mit einem zylinderartigen Aufnahmebolzen 46 mit einer axialen Einbohrung 47 versehen. In diese Einbohrung 47 ist ein Lagerzapfen 48 eines in Figur 1 dargestellten Kugelhalses 49 des Verbindungssystems 19 eingeführt und axial gesichert -nicht dargestellt-.

## Patentansprüche

1. Anhängevorrichtung für ein Fahrzeug, insbesondere einen Personenkraftwagen, die am Heck des Personenkraftwagens angeordnet oder anordenbar ist und einen als Rohrabschnitt ausgeführten mit zumindest bereichsweise einen viereckigen Querschnitt aufweisenden Querträger sowie an Endbereichen des Querträgers befestigte Längsträger umfasst, über die die Anhängevorrichtung an Rahmenabschnitten eines Aufbaus des Personenkraftwagens befestigt oder befestigbar ist, wobei der Querträger in einer Mittellängsebene des Personenkraftwagens mit einer Aufnahme oder einer Halterung für ein Verbindungssystem der Anhängevorrichtung versehen ist, wobei der Querträger (13) der Anhängevorrichtung (11) an den Endbereichen (14 und 15) einen rechteckigen Querschnitt besitzt, **dadurch gekennzeichnet, dass** von einer sich in Fahrzeuglängsrichtung des Fahrzeugs erstreckenden Flachseite des Längsträgers (16, 17) Wandabschnitte winkelig abstehen, die Befestigungskonsolen (24, 25, 26 und 27, 28, 29) bilden, welche jeweils längere etwa horizontal ausgerichtete obere und untere Seiten (20 und 21) sowie eine hintere entgegen der Fahrtrichtung (C) weisende aufrechte Seite des Querträgers (13) mit Berührungskontakt umgreifen.

2. Anhängevorrichtung nach Anspruch 1, **dadurch gekennzeichnet, dass** jeder Längsträger (z.B. 16) aus hochfestem Flachmaterial, vorzugsweise aus Metall, Verbundwerkstoff oder dgl. hergestellt ist, wobei die längere Querschnittseite (30) im Wesentlichen aufrecht steht.

3. Anhängevorrichtung nach den Ansprüchen 1 und 2, **dadurch gekennzeichnet, dass** die Befestigungskonsolen (24, 25, 26) aus einem Stück mit dem Längsträger (16) hergestellt sind.

4. Anhängevorrichtung nach einem der vorhergehenden Ansprüche, **dadurch gekennzeichnet, dass** die Befestigungskonsolen (24, 25, 26) durch Abwinkelungen (31, 32, 33) oder Abkantungen des Längsträgers (16) gebildet sind.

5. Anhängevorrichtung nach einem oder mehreren der vorangehenden Ansprüche, **dadurch gekennzeichnet, dass** die Befestigungskonsolen (24, 25, 26) durch Schrauben, Kleben oder dgl. mit dem Querträger (13) verbunden sind.

6. Anhängevorrichtung nach Anspruch 5, **dadurch gekennzeichnet, dass** die Befestigungskonsolen (24, 25) an der untere Seite (21) und der obere Seite (20) des Querträgers durch Schrauben (34 und 35) gehalten werden, wogegen die Befestigungskonsole (26) an der hinteren aufrechten Seite (23) durch Kleben befestigt ist.

7. Anhängevorrichtung nach einem der vorhergehenden Ansprüche, **dadurch gekennzeichnet, dass** die Aufnahme (36) für das Verbindungssystem (19) am Querträger (13) durch montierbare Glieder in Lage gehalten wird, welche Glieder die horizontalen oberen und unteren Seiten (20 und 21) des Querschnitts (18) des Querträgers (13) durchdringen.

8. Anhängevorrichtung nach Anspruch 7, **dadurch gekennzeichnet, dass** die Glieder durch Schrauben (37, 38, 39, 40) gebildet werden, die sich mit ihren Schraubenköpfen (41) bzw. Schraubenmuttern (43) an einer Stützplatte (42) an der oberen Seite (20) und einer Tragplatte (44) an der unteren Seite (21) abstützen.

9. Anhängevorrichtung nach Anspruch 8, **dadurch gekennzeichnet, dass** die Tragplatte (44) mit einem Aufnahmebolzen (46) für einen Lagerzapfen (48) eines Kugelhalses (49) des Verbindungssystems (19) ausgebildet sind.

10. Anhängevorrichtung nach einem der vorhergehenden Ansprüche, **dadurch gekennzeichnet, dass** sie ein Verbindungssystem oder Zugsystem mit einem Kupplungsarm aufweist, der lösbar an der an dem Querträger angeordneten Aufnahme anordenbar ist oder der fest am Querträger montiert ist, oder dass das Verbindungssystem einen schwenkbar am Querträger mittels einer Lageranordnung gelagerten Kupplungsarm aufweist.

11. Anhängevorrichtung nach einem der vorhergehenden Ansprüche, **dadurch gekennzeichnet, dass** die Befestigungskonsolen (24, 25, 26) jeweils eine Steckaufnahme zum Einstecken des Längsendes des Querträgers (13) begrenzen.

12. Anhängevorrichtung nach einem der vorhergehenden Ansprüche, **dadurch gekennzeichnet, dass** mindestens eine Befestigungskonsole (24, 25, 26 und 27, 28, 29) mit dem Grundmaterial des jeweiligen Längsträger (16, 17) einstückig ist und/oder dass mindestens eine Befestigungskonsole (24, 25, 26 und 27, 28, 29) einen am Grundkörper des Längsträgers ( 16, 17) mittels einer Schweißverbindung und/oder Schraubverbindung und/oder Klebeverbindung befestigten Wandkörper umfasst.

## Claims

1. Attaching device for a vehicle, in particular a car, which is or may be fitted to the rear of the car, and includes a cross-member in the form of a tube section with a rectangular cross-section at least in certain areas, together with longitudinal members fixed to end sections of the cross-member and via which the attaching device is or may be fastened to frame sections of a body of the car, wherein the cross-member is provided on a central longitudinal plane of the car with a seating or a mounting for a connecting system of the attaching device, wherein the cross-member (13) of the attaching device (11) has a rectangular cross-section at the end sections (14 and 15), **characterised in that** there are, protruding at an angle from a flat side of the longitudinal member (16, 17) extending in the vehicle axial direction of the vehicle, wall sections which form mounting brackets (24, 25, 26 and 27, 28, 29) which in each case encompass with physical contact longer and roughly horizontally aligned top and bottom sides (20 and 21), also a rear upright side of the cross-member (13) facing against the direction of travel (C).

2. Attaching device according to claim 1, **characterised in that** each longitudinal member (e.g. 16) is made of high-strength flat material, preferably of metal, composite material or similar, wherein the longer cross-section side (30) is substantially upright.

3. Attaching device according to claims 1 and 2, **characterised in that** the mounting brackets (24, 25, 26) are made as one piece integral with the longitudinal member (16).

4. Attaching device according to any of the preceding claims, **characterised in that** the mounting brackets (24, 25, 26) are formed by offsets (31, 32, 33) or folds of the longitudinal member (16).

5. Attaching device according to one or more of the preceding claims, **characterised in that** the mounting brackets (24, 25, 26) are joined to the cross-member (13) by screwing, bonding or the like.

6. Attaching device according to claim 5, **characterised in that** the mounting brackets (24, 25) are held to the bottom side (21) and the top side (20) of the cross-member by screws (34 and 35), whereas the mounting bracket (26) on the rear upright side (23) is fixed by bonding.

7. Attaching device according to any of the preceding claims, **characterised in that** the seating (36) for the connecting system (19) is held in position on the cross-member (13) by mountable members, which penetrate the horizontal top and bottom sides (20 and 21) of the cross-section (18) of the cross-member (13).

8. Attaching device according to claim 7, **characterised in that** the members are formed by screws (37, 38, 39, 40) which rest with their screw heads (41) or screw nuts (43) on a support plate (42) on the top side (20) and on a supporting plate (44) on the bottom side (21).

9. Attaching device according to claim 8, **characterised in that** the supporting plate (44) is made with a locating pin (46) for a bearing pin (48) of a spherical neck (49) of the connecting system (19).

10. Attaching device according to any of the preceding claims, **characterised in that** it has a connecting system or towing system with a coupling arm, which may be fitted releasably to the seating provided on the cross-member or is mounted permanently on the cross-member, or that the connecting system has a coupling arm mounted pivotably on the cross-member by means of a bearing assembly.

11. Attaching device according to any of the preceding claims, **characterised in that** the mounting brackets (24, 25, 26) each bound a plug-in socket for insertion of the long end of the cross-member (13).

12. Attaching device according to any of the preceding claims, **characterised in that** at least one mounting bracket (24, 25, 26 and 27, 28, 29) is integral with the base material of the longitudinal member (16, 17) and/or at least one mounting bracket (24, 25, 26 and 27, 28, 29) includes a wall body fastened to the basic body of the longitudinal member (16, 17) by means of a welded connection and/or screw connection and/or bonded connection.

## Revendications

1. Dispositif de remorquage pour un véhicule, en particulier pour un véhicule de tourisme, qui est disposé ou qui peut être disposé à l'arrière du véhicule de tourisme et qui comprend une traverse réalisée sous la forme d'un segment tubulaire et présentant au moins par endroits une section transversale quadrangulaire ainsi que des longerons fixés au niveau des zones d'extrémité de la traverse, par l'intermédiaire desquels longerons le dispositif de remorquage est fixé ou peut être fixé au niveau de segments de châssis d'une carrosserie du véhicule de tourisme, dans lequel la traverse est pourvue, dans un plan longitudinal médian du véhicule de tourisme, d'un logement ou d'un support pour un système d'assemblage du dispositif de remorquage, dans lequel la traverse (13) du dispositif de remorquage (11) possède au niveau des zones d'extrémité (14 et 15) une section transversale rectangulaire, **caractérisé en ce que** dépassent, de manière angulaire, d'un côté plat, s'étendant dans le sens longitudinal du véhicule, du longeron (16, 17), des segments de paroi, qui forment des consoles de fixation (24, 25, 26 et 27, 28, 29), qui entourent en contact respectivement des côtés supérieurs et inférieurs (20 et 21) plus longs orientés de manière approximativement horizontale, ainsi qu'un côté arrière vertical, pointant dans le sens opposé au sens de conduite (C), de la traverse (13).

2. Dispositif de remorquage selon la revendication 1, **caractérisé en ce que** chaque longeron (par exemple 16) est fabriqué à partir d'un matériau plat hautement résistant, par exemple à partir d'un métal, d'un matériau composite ou similaire, dans lequel le côté de section transversale (30) plus long se tient essentiellement à la verticale.

3. Dispositif de remorquage selon les revendications 1 et 2, **caractérisé en ce que** les consoles de fixation (24, 25, 26) sont fabriquées à partir d'une pièce avec le longeron (16).

4. Dispositif de remorquage selon l'une quelconque des revendications précédentes, **caractérisé en ce que** les consoles de fixation (24, 25, 26) sont formées par des coudages (31, 32, 33) ou des pliages du longeron (16).

5. Dispositif de remorquage selon l'une quelconque ou plusieurs des revendications précédentes, **caractérisé en ce que** les consoles de fixation (24, 25, 26) sont assemblées à la traverse (13) par un vissage, un collage ou similaire.

6. Dispositif de remorquage selon la revendication 5, **caractérisé en ce que** les consoles de fixation (24, 25) sont maintenues au niveau du côté inférieur (21) et au niveau du côté supérieur (20) de la traverse par des vis (34 et 35), tandis que la console de fixation (26) est fixée par collage au niveau du côté (23) arrière vertical.

7. Dispositif de remorquage selon l'une quelconque des revendications précédentes, **caractérisé en ce que** le logement (36) pour le système d'assemblage (19) est maintenu en position au niveau de la traverse (13) par des organes pouvant être montés, lesquels organes traversent les côtés horizontaux supérieurs et inférieurs (20 et 21) de la section transversale (18) de la traverse (13).

8. Dispositif de remorquage selon la revendication 7, **caractérisé en ce que** les organes sont formés par des vis (37, 38, 39, 40), qui prennent appui par leurs têtes de vis (41) ou par leurs écrous de vis (43) au niveau d'une plaque de soutien (42), au niveau du côté supérieur (20) et au niveau d'une plaque porteuse (44) au niveau du côté inférieur (21).

9. Dispositif de remorquage selon la revendication 8, **caractérisé en ce que** la plaque porteuse (44) est réalisée avec un boulon de logement (46) pour un tourillon de palier (48) d'un col de boule d'attelage (49) du système d'assemblage (19).

10. Dispositif de remorquage selon l'une quelconque des revendications précédentes, **caractérisé en ce qu'**il présente un système d'assemblage ou un système de traction pourvu d'un bras de couplage, qui peut être disposé de manière amovible au niveau du logement disposé au niveau de la traverse ou qui est monté de manière solidaire au niveau de la traverse, ou **en ce que** le système d'assemblage présente un bras de couplage monté de manière à pouvoir pivoter au niveau de la traverse au moyen d'un ensemble de palier.

11. Dispositif de remorquage selon l'une quelconque des revendications précédentes, **caractérisé en ce que** les consoles de fixation (24, 25, 26) délimitent respectivement un logement d'emboîtement servant à emboîter l'extrémité longitudinale de la traverse (13).

12. Dispositif de remorquage selon l'une quelconque des revendications précédentes, **caractérisé en ce qu'**au moins une console de fixation (24, 25, 26 et 27, 28, 29) est d'un seul tenant avec le matériau de base du longeron (16, 17) respectif, et/ou **en ce qu'**au moins une console de fixation (24, 25, 26 et 27, 28, 29) comprend un corps de paroi fixé au niveau du corps de base du longeron (16, 17) au moyen d'un système d'assemblage par soudage et/ou d'un système d'assemblage par vissage et/ou d'un système d'assemblage par collage.
